# FASCICULE DE BREVET EUROPEEN

(11) **EP 2 145 775 B1**
(45) Date de publication et mention de la délivrance du brevet: **29.09.2010**
(21) Numéro de dépôt: 09290544.7
(22) Date de dépôt: 07.07.2009
(51) Int. Cl.: B60C 7/12, B60C 7/24

(54) **Pneumatique semi-creux et jante de roue associée, notamment pour machines agricoles**
Halbhohlreifen und entsprechende Radfelge, insbesondere für Landwirtschaftsmaschinen
Semi-hollow tyre and associated wheel rim, in particular for farming machines

(30) Priorité: 18.07.2008 FR 0804107
(43) Date de publication de la demande: 20.01.2010
(73) Titulaire: OTICO, 77650 Chalmaison (FR)
(72) Inventeur: Phely, Olivier, 77520 Thenisy (FR); Piou, Denis, 89340 Villeblevin (FR)
(74) Mandataire: Bezault, Jean

(56) Documents cités:
- DE-A1- 3 217 946
- FR-A- 2 850 607

## Description

L'invention se rapporte au domaine des roues et elle concerne plus particulièrement un pneumatique semi-creux et une jante de roue associée, notamment pour les machines agricoles.

Elle vise principalement, mais non limitativement, une roue destinée à un élément de semoir pour régler la profondeur de travail de cet élément et/ou pour rappuyer le sol après le passage de cet élément.

Dans les machines agricoles de ce type, un outil de travail du sol tel qu'un soc, un disque ou une dent vient créer un sillon dans lequel des graines ou semences sont enfouies, le sillon étant ensuite refermé pour permettre la germination des graines ou semences.

Ces machines agricoles sont tirées par un tracteur et sont généralement du type porté ou semi-porté.

La roue qui équipe le semoir sert avant tout de roue de jauge pour contrôler la profondeur de travail du semoir. Mais elle peut servir aussi à rappuyer le sol pour refermer le sillon dans lequel les graines ou semences ont été déposées.

Dans certaines machines, ces roues servent seulement de roue de jauge, alors que dans d'autres elles servent seulement de roue de rappuyage. Mais ces roues peuvent aussi exercer une double fonction de jauge et de rappuyage.

Une telle roue peut être disposée en avant de l'outil ou en arrière de l'outil par rapport au sens de déplacement de la machine.

Dans tous les cas ces roues sont soumises à des conditions de travail difficiles compte tenu du fait que la machine avance très souvent à une vitesse de l'ordre de 15 à 20 km/h en plein champ, donc dans un terrain irrégulier et parfois accidenté. Elles sont également soumises à des contraintes importantes, notamment lorsque la machine fonctionne en dévers ou à l'occasion de demi-tours.

Par ailleurs, lorsque la roue circule sur un terrain humide ou collant, de la terre mouillée est susceptible de se coller sur la roue empêchant cette dernière de remplir correctement ses fonctions.

La conception de telles roues est donc particulièrement délicate.

La solution la plus répandue est une roue comportant un pneumatique gonflé classique monté autour d'une jante classique. Pour un fonctionnement optimal le pneumatique doit être gonflé à une pression correcte, si bien que le pneumatique ainsi obtenu est sensible aux contraintes et manque de souplesse. Il a donc tendance à accumuler de la terre lorsqu'il roule sur un terrain humide.

On connaît aussi des roues équipées de pneumatiques spéciaux, en particulier de type semi-creux. De tels pneumatiques selon le préambule de la revendication 1 sont divulgués, par exemple, par FR-A-2 850 607. En outre DE 32 17946 A1 divulgue un pneumatique de profil fermé monté sur une jante. Ainsi, la Demanderesse commercialise une roue comprenant une jante formée d'un moyeu entouré d'un siège périphérique muni d'une fente périphérique, ainsi qu'un pneumatique de type semi-creux comportant une enveloppe ayant un volume interne non gonflé, ladite enveloppe comportant une paroi intérieure propre à entourer le siège périphérique et munie d'un talon de retenue propre à s'engager dans la fente périphérique, ainsi qu'une paroi extérieure convexe formant la bande de roulement du pneumatique.

La paroi extérieure de la jante est généralement cylindrique, de même que la paroi intérieure de l'enveloppe.

La roue de cette deuxième solution donne généralement satisfaction, mais il existe un besoin pour en améliorer encore les performances, notamment pour la circulation en terrains difficiles, par exemple sur terrains en pente ou en dévers ou sur terrains humides et collants.

L'invention a notamment pour but d'apporter une solution à ce problème.

Selon un premier aspect, l'invention concerne un pneumatique de type semi-creux, tel que défini dans la revendication 1.

Du fait de sa configuration particulière, l'enveloppe du pneumatique semi-creux vient coiffer la forme convexe, donc bombée vers l'extérieur, de la paroi extérieure du siège périphérique de la jante en enveloppant le siège périphérique et en s'étendant en direction du moyeu de la jante.

Cette structure enveloppante autorise une meilleure coopération de forme entre l'enveloppe du pneumatique et le siège périphérique de la jante, ce qui permet une meilleure tenue et une meilleure performance de ce pneumatique notamment dans des conditions difficiles, par exemple sur terrains en dévers, terrains glissants, etc.

En outre, cette forme particulière du pneumatique semi-creux lui confère une souplesse accrue, ce qui facilite son auto-nettoyage lorsque la roue circule sur un terrain humide et collant.

Sous un autre aspect l'invention concerne une jante de roue telle que définie dans la revendication 9, propre à être associée à un pneumatique semi-creux tel que défini dans la revendication 1.

L'invention concerne encore une roue formée d'une jante et d'un pneumatique semi-creux tels que définis ci-dessus.

Dans la description détaillée qui suit, faite seulement à titre d'exemple, on se réfère aux dessins annexés, sur lesquels :
- la figure 1 est une vue de face d'une roue comprenant un pneumatique semi-creux et une jante selon l'invention ;
- la figure 2 est une vue en coupe selon la ligne II-II de la figure 1 ;
- la figure 3 est une vue en perspective de la roue des figures 1 et 2 ;
- la figure 4 représente une demi-coupe de la figure 2 à échelle agrandie ;
- la figure 5 est une vue analogue à la figure 2 dans une variante de réalisation où une armature de renfort est noyée dans la paroi intérieure de l'enveloppe ; et
- les figures 6 et 7 sont des vues en coupe analogues à la figure 2 dans des variantes de réalisation où la bande de roulement du pneumatique est pourvue de reliefs extérieurs.

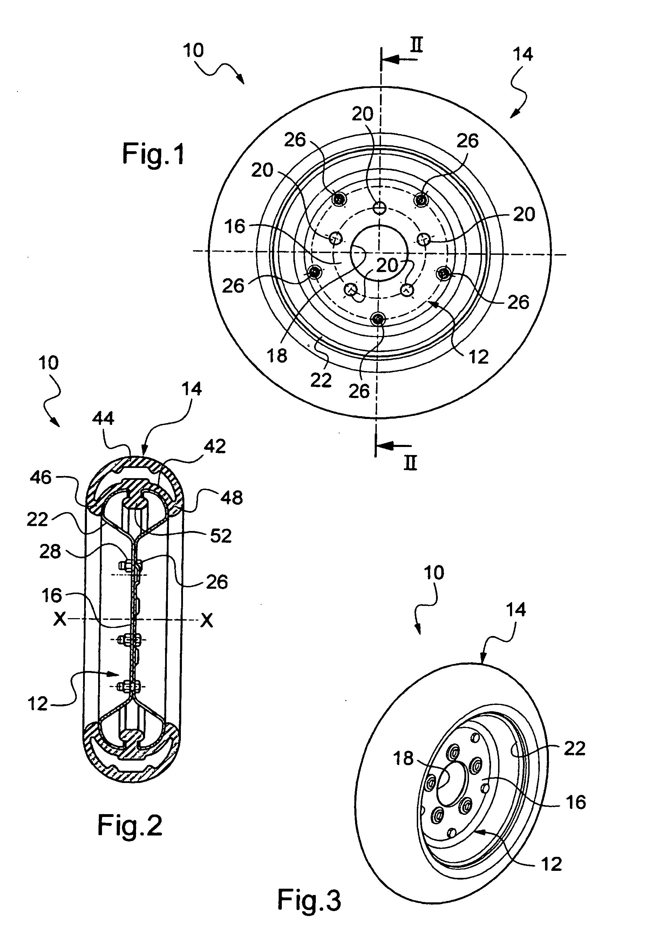

On se réfère d'abord aux figures 1 à 3 qui représentent une roue 10 pour machine agricole comprenant une jante 12 autour de laquelle est montée un pneumatique 14 de type semi-creux, encore appelé « bandage ».

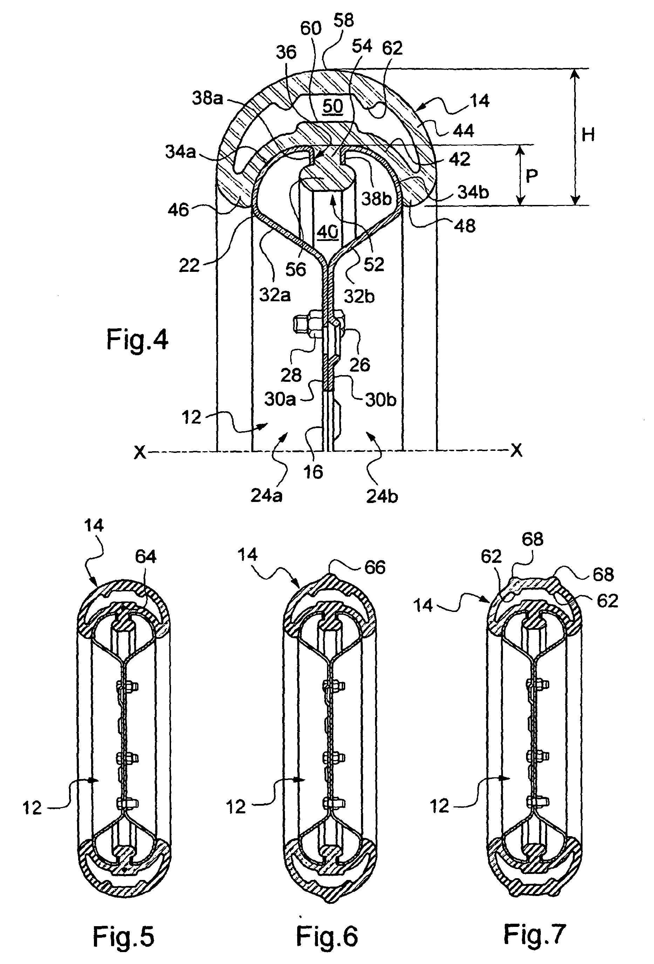

La jante 12 est formée d'un moyeu 16 muni d'une ouverture centrale circulaire 18 d'axe XX et de trous de fixation 20, dans l'exemple au nombre de cinq, servant au montage de la jante sur un support approprié (figure 1). Le moyeu 16 est entouré d'un siège périphérique 22 de forme annulaire, appelé aussi « assise », autour duquel est monté le pneumatique 14. La structure de la roue 10 (jante 12 et pneumatique 14) sera mieux comprise à l'examen des figures 2 et 4.

Dans l'exemple, la jante 12 est formée de deux flasques 24a et 24b qui sont assemblés entre eux par cinq couples vis 26 - écrou 28. Chaque vis 26 traverse successivement une partie centrale 30b du flasque 24b et une partie centrale 30a du flasque 24a avant de recevoir un écrou 28 (figure 4).

Les parties centrales 30a et 30b se poursuivent respectivement par des parois intérieures 32a et 32b qui s'évasent dans la direction radiale extérieure et se poursuivent par des parois extérieures 34a et 34b qui convergent l'une vers l'autre. Ces dernières constituent conjointement une paroi extérieure du siège périphérique 22 qui présente une section transversale radiale de forme convexe, donc de forme bombée vers l'extérieur. Dans l'exemple, cette section transversale est sensiblement semi-circulaire. En d'autres termes, chacune des parois extérieures 34a et 34b a sensiblement une section en quart de cercle dans la direction radiale.

Cette paroi extérieure présente un sommet qui est interrompu pour définir une fente périphérique 36 qui est délimitée par deux rebords pliés respectifs 38a et 38b en vis-à-vis issus des parois extérieures 34a et 34b du siège périphérique. Les parois extérieures 34a et 34b se raccordent ainsi aux parties centrales 30a et 30b par les parois intérieures 32a et 32b qui vont en s'amincissant en direction du moyeu 16.

Dans l'exemple de réalisation, les flasques 24a et 24b sont réalisés à partir d'une tôle métallique, par exemple en acier. Toutefois, dans une variante de réalisation non représentée, la jante pourrait être réalisée d'une seule pièce. Par ailleurs, la jante pourrait être formée d'une matière plastique, qu'elle soit en une ou plusieurs pièces.

La section transversale du siège périphérique 22 est creuse et délimite une chambre 40 de forme annulaire. Les rebords pliés 38a et 38b sont tournés vers l'intérieur de la chambre 40. La section transversale radiale du siège 22 présente ainsi une forme générale de coeur.

Le pneumatique 14 du type semi-creux vient coiffer la paroi extérieure 34a, 34b du siège périphérique 22 grâce à une forme particulière. Ce pneumatique comporte une enveloppe réalisée dans un matériau élastomère, par exemple en caoutchouc. Cette enveloppe comporte une paroi intérieure 42 de forme concave de manière à coiffer la paroi extérieure 34a, 34b du siège périphérique 22 de la jante. Cette paroi intérieure 42 est reliée à une paroi extérieure 44 de forme convexe qui constitue la bande de roulement du pneumatique. Les parois 42 et 44 sont reliées par deux bordures annulaires 46 et 48 qui recouvrent la paroi extérieure du siège périphérique en direction du moyeu.

L'enveloppe du pneumatique délimite un volume interne 50 qui n'est pas gonflé et qui communique avec le milieu extérieur par au moins une ouverture (non représentée). Le pneumatique peut être réalisé par un procédé classique de fabrication de pneumatiques semi-creux.

La paroi intérieure 42 est munie d'un talon de retenue 52 qui fait saillie dans la direction radiale intérieure et est propre à s'engager dans la fente périphérique 36 pour assurer le maintien du pneumatique en position sur la jante.

Dans l'exemple, le talon de retenue 52, qui est rattaché à la paroi intérieure 42 de l'enveloppe présente un profil en forme de « champignon » ou de « T », avec une partie étroite 54 rattachée à la paroi intérieure 42 et une tête élargie 56 propre à être reçue dans la chambre intérieure 40 du siège périphérique.

Ainsi, le talon de retenue 52 est maintenu entre les deux flasques 24a et 24b lors de leur assemblage.

Dans le cas d'une roue d'une seule pièce, il est possible de réaliser aussi l'insertion d'un tel talon de retenue, mais cela nécessite d'élargir radialement le pneumatique et d'introduire en force le talon dans la fente délimitée à la périphérie du siège de la jante.

La paroi intérieure 42 présente une section transversale sensiblement semi-circulaire et il en est de même pour la paroi extérieure 44. Ainsi, l'enveloppe présente une section droite radiale ayant sensiblement la forme d'un croissant.

Comme on le voit sur la figure 4, la paroi intérieure 42 présente une profondeur radiale P, définie comme la distance radiale entre les bordures annulaires 46 et 48 et le fond de la paroi intérieure, c'est-à-dire la où vient se raccorder le talon de retenue 52. La paroi extérieure 44 présente une hauteur radiale H, définie comme la distance radiale entre les bordures annulaires 46 et 48 et le sommet 58 de la paroi extérieure. Le rapport P/H entre la profondeur radiale et la hauteur radiale est d'au moins 0,25, de préférence compris entre 0,25 et 0,50. Dans l'exemple, ce rapport est de 44,5 %.

La présence d'un rapport supérieur à 0,25 permet une bonne coopération de forme entre le siège de la jante et le pneumatique pour assurer une bonne tenue mécanique.

Dans l'exemple représenté sur les figures 1 à 4, la paroi extérieure 44 formant bande de roulement est lisse extérieurement mais, comme on le verra plus loin, celle-ci peut être aussi munie de reliefs extérieurs.

Selon une particularité intéressante, la paroi intérieure 42 et la paroi extérieure 44 de l'enveloppe présentent des profils respectifs complémentaires disposés en vis-à-vis à l'intérieur de l'enveloppe et propres à s'emboîter mutuellement lorsque l'enveloppe est comprimée au sol sous l'effet d'une charge.

Dans l'exemple représenté, ces profils respectifs complémentaires comprennent une saillie centrale 60 issue de la paroi intérieure 42 et deux saillies latérales 62, espacées entre elles, issues de la paroi extérieure 44 et propres à loger entre elles la saillie centrale 60 lorsque l'enveloppe est comprimée au sol.

En effet, comme le pneumatique est du type semi-creux, l'enveloppe a tendance à s'écraser naturellement au contact du sol, sous l'effet de la charge. La saillie centrale 60 est alors reçue entre les deux saillies latérales 62, ce qui permet d'empêcher tout mouvement relatif latéral entre les parois 42 et 44. Ceci est particulièrement intéressant lorsque la roue circule en terrain difficile, par exemple sur un terrain en pente ou sur un terrain en dévers, car cela permet à la roue de maintenir sa trajectoire.

Dans la variante de la figure 5, une armature de renfort 64 est noyée dans la paroi intérieure 42 de l'enveloppe à proximité du talon de retenue 52. Cette armature qui est avantageusement un anneau métallique ou un câble, permet de renforcer l'enveloppe dans la région du talon périphérique, qui est particulièrement sollicitée.

Comme déjà indiqué, la paroi extérieure 44 formant bande de roulement, peut être pourvue de reliefs extérieurs. Dans l'exemple de la figure 6, la paroi extérieure 44 est entourée d'une nervure centrale extérieure 66 qui est disposée au sommet de la bande de roulement.

Dans le cas de la figure 7, cette paroi extérieure est munie de deux nervures latérales extérieures 68 mutuellement espacées. Ces deux nervures 68 sont disposées sensiblement dans la région des saillies latérales .62 précitées. D'autres types de reliefs sont envisageables, par exemple des crampons.

L'invention s'applique avant tout aux roues à usage agricole, notamment aux roues de jauge et/ou de rappui du sol.

La jante de la roue peut être réalisée d'une seule pièce ou de deux parties, soit en métal, soit encore en matière plastique.

La forme bombée de la paroi extérieure de la jante peut présenter une forme autre que semi-circulaire, par exemple une forme à double pente.

Egalement, la forme du pneumatique est susceptible de nombreuses variantes de réalisation dans la mesure où la paroi intérieure de celui-ci vient coiffer le siège de la jante et déborder de ce siège pour s'étendre vers le moyeu en réalisant une forme enveloppante.

Le pneumatique est particulièrement souple ce qui procure un effet auto-nettoyant accru.

Le pneumatique de l'invention peut égaler rouler sur route, dans la mesure où sa vitesse ne dépasse pas un seuil généralement d'environ 40 km/h.

## Revendications

1. Pneumatique de type semi-creux (14) comportant une enveloppe ayant un volume interne non gonflé, ladite enveloppe comportant une paroi intérieure (42) qui est munie d'un talon de retenue (52), ainsi qu'un paroi extérieure (44) convexe formant la bande de roulement du pneumatique, la paroi intérieure (42) et la paroi extérieure (44) du pneumatique étant reliées par deux bordures annulaires (46, 48),
**caractérisé en ce que** la paroi intérieure (42) est concave et **en ce que** l'enveloppe présente une section droite radiale ayant sensiblement la forme d'un croissant, la paroi intérieure (42) présentant une profondeur radiale (P), définie comme la distance radiale entre les bordures annulaires (46, 48) et le fond de la paroi intérieure, et la paroi extérieure (44) présentant une hauteur radiale (H), définie comme la distance radiale entre les bordures annulaires (46, 48) et le sommet (58) de la paroi extérieure, le rapport (P/H) entre la profondeur radiale et la hauteur radiale étant d'au moins 0,25, de préférence compris entre 0,25 et 0,50.

2. Pneumatique de type semi-creux selon la revendication 1, **caractérisé en ce que** la paroi intérieure (42) de l'enveloppe présente une section transversale sensiblement semi-circulaire.

3. Pneumatique de type semi-creux selon l'une des revendications 1 et 2, **caractérisé en ce que** le talon de retenue (52) rattaché à la paroi intérieure (42) de l'enveloppe présente un profil en forme de champignon ou de T avec une partie étroite (54) rattachée à la paroi intérieure et une tête élargie (56).

4. Pneumatique de type semi-creux selon l'une des revendications 1 et 3, **caractérisé en ce qu'**une armature de renfort (64) est noyée dans la paroi intérieure (42) de l'enveloppe à proximité du talon de retenue (52).

5. Pneumatique de type semi-creux selon l'une des revendications 1 à 4, **caractérisé en ce que** la paroi intérieure (42) et la paroi extérieure (44) de l'enveloppe présentent des profils complémentaires (60, 62) disposés en vis-à-vis à l'intérieur de l'enveloppe et propres à s'emboîter mutuellement lorsque l'enveloppe est comprimée au sol sous l'effet d'une charge.

6. Pneumatique de type semi-creux selon la revendication 5, **caractérisé en ce que** les profils complémentaires comprennent une saillie centrale (60) issue de la paroi intérieure (42) et deux saillies latérales (62) espacées issues de la paroi extérieure (44) et propres à loger entre elles la saillie centrale (60) lorsque l'enveloppe est comprimée au sol.

7. Pneumatique de type semi-creux selon l'une des revendications 1 à 6, **caractérisé en ce que** la paroi extérieure (44) du pneumatique qui forme bande de roulement est généralement lisse extérieurement.

8. Pneumatique de type semi-creux selon l'une des revendications 1 à 6, **caractérisé en ce que** la paroi extérieure (44) du pneumatique qui forme bande de roulement est pourvue de reliefs extérieurs (66 ; 68), en particulier d'au moins une nervure annulaire extérieure.

9. Jante de roue formée d'un moyeu (16) entouré d'un siège périphérique (22) muni d'une fente périphérique (36), **caractérisée en ce que** le siège périphérique (22) de la jante comporte une paroi extérieure (34a, 34b) bombée vers l'extérieur et présentant un sommet dans lequel est aménagée la fente périphérique (36), et **en ce que** la paroi extérieure (34a, 34b) du siège périphérique (22) présente une section transversale sensiblement en arc de cercle interrompue pour former la fente périphérique (36), ladite paroi extérieure (34a, 34b) étant propre à recevoir la paroi intérieure (42) d'un pneumatique de type semi-creux selon l'une des revendications 1 à 8, le talon de retenue (52) étant reçu dans la fente périphérique du siège périphérique.

10. Jante de roue selon la revendication 9, **caractérisée en ce que** la fente périphérique (36) est délimitée par deux rebords pliés (38a, 38b) en vis-à-vis issus de la paroi extérieure (34a, 34b) du siège périphérique (22) de la jante et tournés vers l'intérieur d'une chambre (40) du siège périphérique (22).

11. Jante de roue selon l'une des revendications 9 et 10, **caractérisée en ce que** la paroi extérieure (34a, 34b) du siège périphérique (22) se prolonge par une paroi intérieure (32a, 32b) qui se rétrécit en direction du moyeu (16).

12. Jante de roue selon l'une des revendications 9 à 11, **caractérisée en ce que** la jante (12) est formée par l'assemblage de deux flasques (24a, 24b), de préférence en métal, qui délimitent conjointement la fente périphérique (36).

13. Roue comprenant un pneumatique de type semi-creux (14) selon l'une des revendications 1 à 8, monté autour d'une jante (12) selon l'une des revendications 9 à 12.

## Claims

1. Pneumatic tyre of the semi-hollow type (14) comprising a casing having an uninflated inner volume, said casing comprising an inner wall (42) which is provided with a retaining bead (52), as well as a convex outer wall (44) forming the tread of the tyre, the inner wall (42) and outer wall (44) of the tyre being connected by two annular borders (46, 48),
**characterised in that** the inner wall (42) of the tyre is concave, and **in that** the casing has a substantially crescent-shaped radial cross-section, the inner wall (42) having a radial depth (P), defined as the radial distance between the annular borders (46, 48) and the bottom of the inner wall, and the outer wall (44) has a radial height (H), defined as the radial distance between the annular borders (46, 48) and the top part (58) of the outer wall, the ratio (P/H) between the radial depth and the radial height being at least 0.25, preferably between 0.25 and 0.50.

2. Pneumatic tyre of the semi-hollow type according to claim 1, **characterised in that** the inner wall (42) of the casing has a substantially semi-circular cross-section.

3. Pneumatic tyre of the semi-hollow type according to one of claims 1 and 2, **characterised in that** the retaining bead (52) attached to the inner wall (42) of the casing has a mushroom-shaped or T-shaped profile with a narrow portion (54) attached to the inner wall and a widened head (56).

4. Pneumatic tyre of the semi-hollow type according to one of claims 1 to 3, **characterised in that** a reinforcing framework (64) is embedded in the inner wall (42) of the casing close to the retaining bead (52).

5. Pneumatic tyre of the semi-hollow type according to one of claims 1 to 4, **characterised in that** the inner wall (42) and the outer wall (44) of the casing have complementary profiles (60, 62) arranged facing one another inside the casing and adapted to fit mutually with each other when the casing is compressed on the ground under the effect of a load.

6. Pneumatic tyre of the semi-hollow type according to claim 5, **characterised in that** the complementary profiles comprise a central projection (60) protruding from the inner wall (42) and two spaced-apart lateral projections (62) protruding from the outer wall (44) and adapted to house the central projection (60) between them when the casing is compressed on the ground.

7. Pneumatic tyre of the semi-hollow type according to one of claims 1 to 6, **characterised in that** the outer wall (44) of the tyre forming the tread is generally smooth on the outside.

8. Pneumatic tyre of the semi-hollow type according to one of claims 1 to 6, **characterised in that** the outer wall (44) of the tyre forming the tread is provided with external reliefs (66; 68), particularly at least one external annular rib.

9. Wheel rim formed by a hub (16) surrounded by a peripheral seat (22) provided with a peripheral slot (36), **characterised in that** the peripheral seat (22) of the rim comprises an outwardly domed outer wall (34a, 34b) having a top part in which the peripheral slot (36) is formed, and **in that** the outer wall (34a, 34b) of the peripheral seat (22) has a cross-section substantially in the shape of an arc of a circle interrupted to form the peripheral slot (36), the said outer wall (34a, 34b) being adapted to receive the inner wall (42) of a tyre of the semi-hollow type according to one of claims 1 to 8, the retaining bead (52) being received in the peripheral slot in the peripheral seat.

10. Wheel rim according to claim 9, **characterised in that** the peripheral slot (36) is delimited by two folded edges (38a, 38b) facing one another, protruding from the outer wall (34a, 34b) of the peripheral seat (22) of the rim and turned towards the inside of a chamber (40) of the peripheral seat (22).

11. Wheel rim according to one of claims 9 and 10, **characterised in that** the outer wall (34a, 34b) of the peripheral seat (22) is extended by an inner wall (32a, 32b) which becomes narrower towards the hub (16).

12. Wheel rim according to one of claims 9 to 11, **characterised in that** the rim (12) is formed by the joining together of two cheeks (24a, 24b), preferably made of metal, which jointly delimit the peripheral slot (36).

13. Wheel comprising a pneumatic tyre of the semi-hollow type (14) according to one of claims 1 to 8, mounted about a rim (12) according to one of claims 9 to 12.

## Patentansprüche

1. Halbhohler Luftreifen (14) mit einer Hülle, die ein inneres, nicht aufgeblasenes Volumen aufweist, wobei die Hülle eine innere Seitenwand (42), die mit einem Rückhalteabsatz (52) versehen ist, sowie eine konvexe Außenwand (44), die die Lauffläche des Luftreifens bildet, aufweist, wobei die innere Seitenwand (42) und die äußere Seitenwand (44) des Luftreifens durch zwei ringförmige Ränder (46, 48) verbunden sind,
**dadurch gekennzeichnet, dass** die innere Seitenwand (42) konkav ist, und dass die Hülle einen radialen geraden Abschnitt aufweist, der im Wesentlichen die Form eines Croissants aufweist, wobei die innere Seitenwand (42) eine radiale Tiefe (P) aufweist, die als der radiale Abstand zwischen den ringförmigen Rändern (46, 48) und dem Boden der inneren Seitenwand definiert ist, und die äußere Seitenwand (44) eine radiale Höhe (H) aufweist, die als radialer Abstand zwischen den ringförmigen Rändern (46, 48) und dem Scheitel (58) der äußeren Seitenwand definiert ist, wobei das Verhältnis (P/H) zwischen der radialen Tiefe und der radialen Höhe wenigstens 0,25, vorzugsweise zwischen 0,25 und 0,50 beträgt.

2. Halbhohler Luftreifen nach Anspruch 1, **dadurch gekennzeichnet, dass** die innere Seitenwand (42) der Hülle einen Querschnitt aufweist, der im Wesentlichen halbkreisförmig ist.

3. Halbhohler Luftreifen nach Anspruch 1 oder 2, **dadurch gekennzeichnet, dass** der Rückhalteabsatz (52), der an der inneren Seitenwand (52) der Hülle befestigt ist, ein Profil in Form eines Pilzes oder eines T aufweist, mit einem schmalen Abschnitt (54), der an der inneren Seitenwand befestigt ist, und einem vergrößerten Kopf (46).

4. Halbhohler Luftreifen nach einem der Ansprüche 1 bis 3, **dadurch gekennzeichnet, dass** eine Verstärkungsarmatur (56) in die innere Seitenwand (42) der Hülle in der Nähe des Rückhalteabsatzes (52) eingetaucht ist.

5. Halbhohler Luftreifen nach einem der Ansprüche 1 bis 4, **dadurch gekennzeichnet, dass** die innere Seitenwand (42) und die äußere Seitenwand (44) der Hülle komplementäre Profile (60, 62) aufweisen, die einander gegenüberliegend im Inneren der Hülle angeordnet sind und in der Lage sind, gegenseitig ineinander zu greifen, wenn die Hülle am Boden unter dem Effekt einer Last komprimiert wird.

6. Halbhohler Luftreifen nach Anspruch 5, **dadurch gekennzeichnet, dass** die komplementären Profile einen zentralen Vorsprung (60) aufweisen, der von der inneren Seitenwand (42) ausgeht, und zwei beabstandete seitliche Vorsprünge (62) aufweist, die von der äußeren Seitenwand (44) ausgehen und in der Lage sind, zwischen ihnen den zentralen Vorsprung (60) aufzunehmen, wenn die Hülle am Boden komprimiert wird.

7. Halbhohler Luftreifen nach einem der Ansprüche 1 bis 6, **dadurch gekennzeichnet, dass** die äußere Seitenwand (44) des Luftreifen, die die Lauffläche bildet, im Allgemeinen außen glatt ist.

8. Halbhohler Luftreifen nach einem der Ansprüche 1 bis 6, **dadurch gekennzeichnet, dass** die äußere Seitenwand (44) des Luftreifens, die die Lauffläche bildet, mit äußeren Reliefs (66; 68) versehen ist, insbesondere wenigstens mit einer äußeren ringförmigen Biese versehen ist.

9. Radfelge, gebildet aus einer Nabe (16), die mit einem Umfangssitz (22) umgeben ist, der mit einer Umfangskerbe (36) versehen ist, **dadurch gekennzeichnet, dass** der Umfangssitz (22) der Felge eine äußere Seitenwand (34a, 34b), aufweist, die nach außen gewölbt ist und einen Scheitel aufweist, in dem die Umfangskerbe (36) ausgebildet ist, und dass die äußere Seitenwand (34a, 34b) des Umfangssitzes (22) einen Querschnitt im Wesentlichen in Form eines Kreisbogens aufweist, der unterbrochen ist, um die Umfangskerbe (36) zu bilden, wobei die äußere Seitenwand (34a, 34b) in der Lage ist, die innere Seitenwand (42) eines halbhohlen Luftreifens nach einem der Ansprüche 1 bis 8 aufzunehmen, wobei der Rückhalteabsatz (52) in der Umfangskerbe des Umfangssitzes aufgenommen ist.

10. Radfelge nach Anspruch 9, **dadurch gekennzeichnet, dass** die Umfangskerbe (36) durch zwei gefaltete einander gegenüberliegende Ränder (38a, 38b) begrenzt ist, die von der äußeren Seitenwand (34a, 34b) des Umfangssitzes (22) der Felge ausgehen und zu dem Inneren einer Kammer (40) des Umfangssitzes (22) umgedreht sind.

11. Radfelge nach Anspruch 9 oder 10, **dadurch gekennzeichnet, dass** die äußere Seitenwand (34a, 34b) des Umfangssitzes (22) sich durch eine innere Seitenwand (32a, 32b) verlängert, die sich in Richtung der Nabe (16) verengt.

12. Radfelge nach einem der Ansprüche 9 bis 11, **dadurch gekennzeichnet, dass** die Felge (12) durch das Zusammensetzen von zwei Flanschen (24a, 24b), bevorzugt aus Metall, gebildet ist, die gemeinsam die Umfangskerbe (36) begrenzen.

13. Rad mit einem halbhohlen Luftreifen (14) nach einem der Ansprüche 1 bis 8, das um eine Felge (12) nach einem der Ansprüche 9 bis 12 montiert ist.
